(19) **Europäisches Patentamt**

**European Patent Office**

**Office européen des brevets**

(11) **EP 1 238 536 B1**

(12) **EUROPEAN PATENT SPECIFICATION**

(45) Date of publication and mention
of the grant of the patent:
**08.02.2006 Bulletin 2006/06**

(51) Int Cl.:
***H04N 5/76*** *(2006.01)*

(21) Application number: **00978540.3**

(86) International application number:
**PCT/US2000/031046**

(22) Date of filing: **10.11.2000**

(87) International publication number:
**WO 2001/035647 (17.05.2001 Gazette 2001/20)**

(54) **Catching up real-time video recording after a playback pause**

Einholung einer Video-Echtzeitaufzeichnung nach einer Abspielpause

Reprise de retard sur un enregistrement vidéo en temps réel après une pause de reproduction

(84) Designated Contracting States:
**DE FR GB IT**

(30) Priority: **10.11.1999 US 164791 P**

(43) Date of publication of application:
**11.09.2002 Bulletin 2002/37**

(73) Proprietor: **Thomson Licensing
92100 Boulogne Billancourt (FR)**

(72) Inventor: **LIN, Shu
Indianapolis, IN 46240 (US)**

(74) Representative: **Rittner, Karsten
Deutsche Thomson-Brandt GmbH,
European Patent Operations,
Karl-Wiechert-Allee 74
30625 Hannover (DE)**

(56) References cited:
**EP-A- 0 726 574        WO-A-99/33265
US-A- 5 825 354**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## BACKGROUND OF THE INVENTION

### Technical Field

The inventive arrangements relate generally to methods and apparatus providing advanced operating features for video only and both video and audio programs recorded on disc media, for example recordable digital video discs, hard drives and magneto optical discs.

### Description of the Related Art

Various devices have been developed to enable consumers to record video and/or audio programs for later presentation. Such devices include tape recorders, video cassette recorders, recordable compact discs, and most recently, recordable digital video discs (DVD). Hard drives and magneto optical discs have also been used.

A DVD that can be recorded on only once, and thereafter is essentially a DVD read only memory, is referred to by the acronym DVD-R. The acronym DVD-R is also used generally to refer to the write-once, or record-once, technology. Several formats are available for DVD's to be recorded on, erased and re-recorded; that is, overwritten or rewritten. These are referred to by the acronyms DVD-RAM, DVD-RW and DVD + RW. As of this time no uniform industry standard has been adopted. The acronyms DVD-RAM, DVD-RW and DVD + RW are also used generally to refer to the respective rewritable technologies. Reference herein to rewritable DVD technology, devices and methods is generally intended to encompass all of the standards which are now being used, as well as those which may be developed in the future.

In many cases, the program presentations are recorded in the viewer's absence for presentation at a later, more convenient time. This is referred to as time shifting the program. At other times, the viewer may be called away while he is watching a program that is not being recorded. If the viewer owns a conventional video cassette recorder, the viewer may begin recording the program during the interruption. The viewer, however, must wait until the program is completed to watch the remainder of the program in a proper time sequence. A further complication is that the time to complete the recording can be excessive depending on the length of the broadcast. This can result in the viewer ignoring the interruption or missing significant portions of the program.

To overcome this problem, a DVD video recorder can incorporate a pause feature and a pause-resume feature. If a viewer is interrupted and desires to record a program, the viewer can initiate the pause feature. When activated, this setting, similar to other conventional video recording machines, allows the viewer to record incoming video. Significantly, however, when the pause-resume feature is activated, the DVD video recorder jumps back to that portion of the program where the pause was initiated to commence playback yet continues to record incoming video. As a result, the viewer, if interrupted for any number of reasons, can watch a program in its entirety without having to wait for the original broadcast to end.

When the DVD recorder is in pause-resume mode, there will be a fixed delay between the real-time video signal received by the DVD video recorder device and the display of that video. For example, if a ten minute portion of a video broadcast is recorded when the DVD device is in pause mode, then the displayed video will continuously lag ten minutes behind the real-time recording once the user returns and places the DVD device in the pause-resume mode.

In certain instances, it may be desirable to eliminate this delay. For example, eliminating the delay can permit a DVD recorder to implement an instant replay feature. Under this feature, if a viewer wishes to replay a particular section of a program being recorded, the viewer can instruct the DVD recorder to jump back and immediately replay that particular section. By reviewing a portion of the recorded program, however, any subsequent video that the viewer watches will continuously lag the real-time recording. This may be particularly troublesome if the program is, for example, a live sporting event.

EP-A-0 726 574 A2 discloses an apparatus and method for recording data, wherein a thin-out section can be used to remove units of video from the recorded video thereby enabling the recorded video to catch up to real-time programming. A time code is applied to the units of video for enabling the recorder to compare the recorded video being played back with the real-time broadcast so that the recorder can discontinue the playback signal when the time code of the playback video matches the real-time broadcast video.

Further time shifting methods are described in US-A-5,825,354 and WO-A-99/33265.

### Summary of the Invention

The invention features a method according to claim 1, for resuming real-time display of continuous video programming after a pause interval during which the video programming is recorded on a medium.

In one aspect of the above method, the rate at which the delay between the playback signal and the continuous video programming is reduced is determined at least in part by a number of picture blocks omitted between the selected picture blocks. In addition, the selected picture blocks can be played back at 1P speed. Alternatively, the selected picture blocks can be played back at a rate faster than 1P speed.

In another arrangement of the above method, each selected picture block can be comprised of at least one complete VOBU. In yet another arrangement, each selected picture block can be comprised of only selected pictures comprising less than a complete VOBU.

In another aspect, the invention also features a recordable disc medium system according to claim 8, for resuming real-time display of continuous video programming after a pause interval during which the video programming is recorded on a medium.

In one aspect of the above system, the rate at which the delay between the playback signal and the continuous video programming is reduced is determined at least in part by a number of picture blocks omitted between the selected picture blocks. In addition, the selected picture blocks can be played back at 1P speed. Alternatively, the selected picture blocks can be played back at a rate faster than 1P speed.

In another arrangement of the above system, each selected picture block can be comprised of at least one complete VOBU. In yet another arrangement, each selected picture block can be comprised of only selected pictures comprising less than a complete VOBU.

## Brief Description of the Drawings

FIG. 1 is a block diagram of a rewritable DVD device that can be provided with one or more advanced operating features in accordance with the inventive arrangements herein.

FIG. 2 is a diagram useful for illustrating the spiral track on a rewritable DVD.

FIG. 3 is a diagram useful for explaining the organization of video object units in video object sets.

FIG. 4A is a flow chart that illustrates the operation of a skip and play catch-up mode with accompanying examples.

FIG. 4B is a diagram useful for illustrating the inventive arrangements.

FIG. 5A is a flow chart that illustrates the operation of a smooth catch-up mode with accompanying examples.

FIG. 5B is a diagram useful for illustrating an alternative embodiment of the invention.

FIG. 6A is a flow chart that illustrates the operation of a smooth-skip and play catch-up mode with accompanying examples.

FIG. 6B is a diagram useful for illustrating an alternative embodiment of the invention.

## Detailed Description of the Preferred Embodiments

### Recordable DVD Device

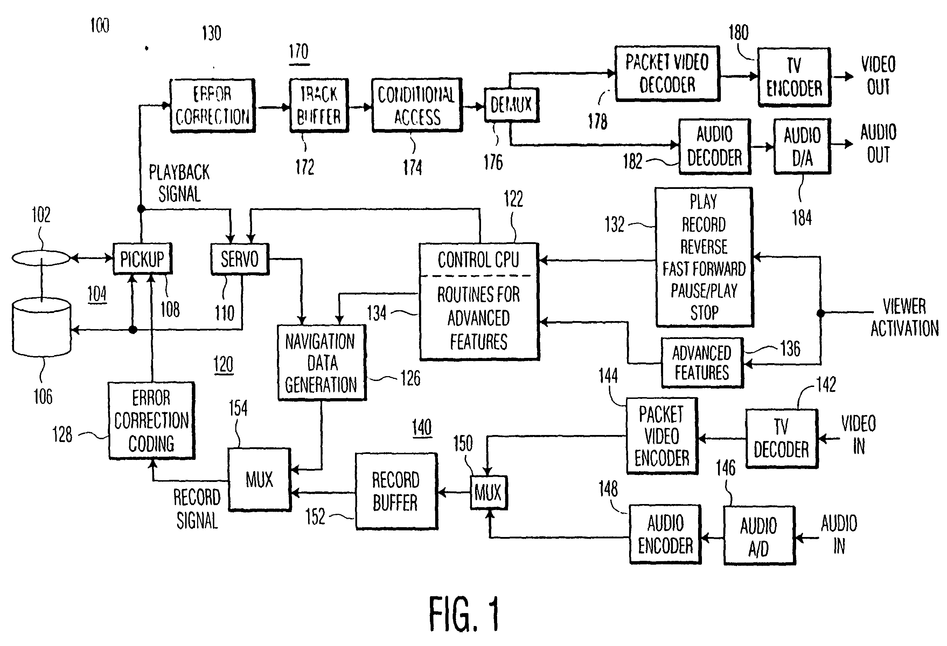

A device 100 for implementing the various advanced operating features in accordance with the inventive arrangements taught herein utilizes a rewritable disc medium in accordance with the inventive arrangements is shown in block diagram form in FIG. 1. The rewritable disc medium is embodied as a rewritable DVD in the illustrated embodiment. In many instances, as will be noted, the rewritable disc medium can also be, for example, a hard drive or a magneto optical disc (MOD). An example of a MOD is a mini-disc. In many instances, the inventive arrangements are applicable to video or audio or both video and audio.

The device 100 is capable of writing onto and reading from the disc medium, in this example, a rewritable DVD 102. The device comprises a mechanical assembly 104, a control section 120, a video/audio input processing path 140 and a video/audio output processing path 170. The allocation of most of the blocks to different sections or paths is self-evident, whereas the allocation of some of the blocks is made for purposes of convenience and is not critical to understanding the operation of the device.

The mechanical assembly 104 comprises a motor 106 for spinning the DVD 102 and a pickup assembly 108 that is adapted to be moved over the spinning disc 102. A laser on the pickup assembly 108 burns spots onto a spiral track on the disc 102 or illuminates spots already burned onto the track for recording and playing back video and/or audio program material. For purposes of understanding the invention, it is irrelevant whether the disc 102 is recordable on one or two sides, or in the event of a double-sided recording, whether the double-sided recording, or subsequent reading from the disc 102, takes place from the same side of the disc or from both sides. The pickup assembly 108 and the motor 106 are controlled by a servo 110. The servo 110 also receives the Playback Signal of data read from the spiral track of the disc 102 as a first input. The Playback Signal is also an input to an error correction circuit 130, which can be considered part of the control section or part of the video/audio output processing path 170.

The control section 120 comprises a control central processing unit (CPU) 122 and a navigation data generation circuit 126. The control CPU 122 supplies a first input signal to the navigation data generation circuit 126, and the servo 110 supplies a second input signal to the navigation data generation circuit 126. The servo 110 can also be considered part of the control section 120. The navigation data generation circuit 126 supplies first input signal to the multiplexer (MUX) 154, which forms part of the video/audio input processing path 140.

The output of the MUX 154 is an input to an error correction coding circuit 128. The output of the error correction coding circuit 128 is a recordable input signal supplied to the pickup 108, which will be "burned" onto the spiral track of the disc 102 by the laser.

The control CPU 122 also preferably has access to the data contained in the track buffer 172 and record buffer 152 as shown in FIG. 1. The control CPU 122 can delete, modify, and reformat video data stored in the track buffer 172 and record buffer 152. Control and data interfaces are also preferably provided for permitting CPU 122 to control the operation of video encoder 144 and audio encoder 148. Suitable software or firmware is provided in memory for the conventional operations performed by control CPU 122. In addition, program routines for the advanced features 134 are provided for controlling CPU 122 in accordance with the invention as shall hereinafter be described in greater detail.

A control buffer 132 for viewer activatable functions indicates those functions presently available, namely play, record, reverse, fast forward, slow play, jump, pause/play and stop. In addition, a separate buffer 136 is provided to receive commands for implementing the inventive arrangements taught herein.

The video/audio input processing path 140 is a signal processing circuit for converting a conventional television signal, for example NTSC or PAL, into digitized packet data, for example MPEG-1 or MPEG-2, for digital recording by the device 100. The input path 140 comprises an NTSC decoder 142 and video encoder, for example MPEG-1 or MPEG-2, 144 for video in, and comprises an audio analog-to-digital converter (A/D) 146 and an audio encoder, for example MPEG, AC3 or DTS, 148. The digitized signals are combined in a multiplexer 150 and stored in the record buffer 152 until an entire packet has been constructed. As groups of audio and video data packets are created, they are combined in MUX 154 with appropriate navigation packets generated in the navigation generation block 126. The packets are then sent to the error correction coding circuit 128. Error correction coding circuit 128 can also be deemed to be part of the input path 140.

The output processing path 170 comprises error correction block 130 and a track buffer, or output buffer, 172, in which data read from the disc 102 is temporarily stored for further processing. This data is processed by conditional access circuit 174 that controls propagation of the data through demultiplexer 176 and into respective paths for video and audio processing.

The video is decoded by decoder 178, for example from MPEG-1 or MPEG-2, and encoded as a conventional television signal, for example NTSC or PAL. The audio is decoded by circuit 182, for example from MPEG, AC3 or DTS, and converted to analog form by audio digital-to-analog (D/A) converter 184.

Notably, the present invention can be realized in hardware, software, or a combination of hardware and software. Machine readable storage according to the present invention can be realized in a centralized fashion in one computer system, for example the control CPU 122, or in a distributed fashion where different elements are spread across several interconnected computer systems. Any kind of computer system or other apparatus adapted for carrying out the methods described herein is acceptable.

Specifically, although the present invention as described herein contemplates the control CPU 122 of FIG. 1, a typical combination of hardware and software could be a general purpose computer system with a computer program that, when being loaded and executed, controls the computer system and a DVD recording system similar to the control section 120 of FIG. 1 such that it carries out the methods described herein. The present invention can also be embedded in a computer program product which comprises all the features enabling the implementation of the methods described herein, and which when loaded in a computer system is able to carry out these methods.

A computer program in the present context can mean any expression, in any language, code or notation, of a set of instructions intended to cause a system having an information processing capability to perform a particular function either directly or after either or both of the following: (a) conversion to another language, code or notation; and (b) reproduction in a different material form. The invention disclosed herein can be a method embedded in a computer program which can be implemented by a programmer using commercially available development tools for operating systems compatible with the control CPU 122 described above.

## DVD Media

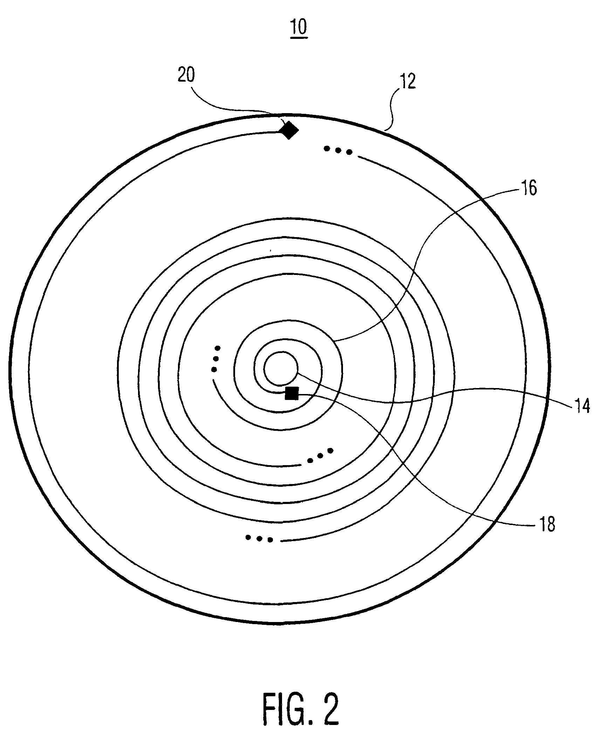

For purposes of illustrating the inventive arrangements, program material can be recorded onto a rewritable DVD and played back from a rewritable DVD. A rewritable DVD 10 shown in FIG. 2 is suitable for use as disc 102 in device 100. The disc 10 is formed by a flat, round plastic plate-like member 12. The rewritable DVD can consist of two substrates bonded together by an adhesive layer forming a 1.2mm thick disk. A center hole 14 can be formed in the disk so that a gripping device of the motor 106 of FIG. 1 can securely grip the disk and control the angular motion of the same in accordance with the inventive arrangements.

The direction of recording on the track is typically outwardly along a spiral track 16, from a smaller radius part of the spiral to a larger radius part of the spiral. The several series of three large dots ( • • • ) denote portions of the track not shown in the drawing. As a result, the beginning of the spiral track is deemed to be near the hole 14, and is denoted by square 18. The end of the spiral is deemed to end near the rim, and is denoted by diamond 20. Those skilled in the art generally accept defining the beginning and end of the spiral as noted. The track can also have a side-to-side wobble, not shown in the drawing, to accommodate media type indexing. Due to difficulties of scale only portions of the track 16 are shown, and these are shown in greatly enlarged scale.

Each nearly circular, radially concentric section of the spiral is sometimes referred to as a track, but this terminology is not commonly accepted as having that specific meaning. In CD-ROM's, for example, the term track is also used to refer to that portion of the spiral track that contains a single audio song, or other selection, and the same may or may not become common for DVD's.

The inventive arrangements have been described herein relative to recordable DVD media. Those skilled in the art will appreciate, however, that the invention is not limited in this regard. Rather, the improvements to DVD navigation information for improved trick modes as described herein can be used with any type of disc media, including but not limited to DVD-R type media.

## DVD Data Structures

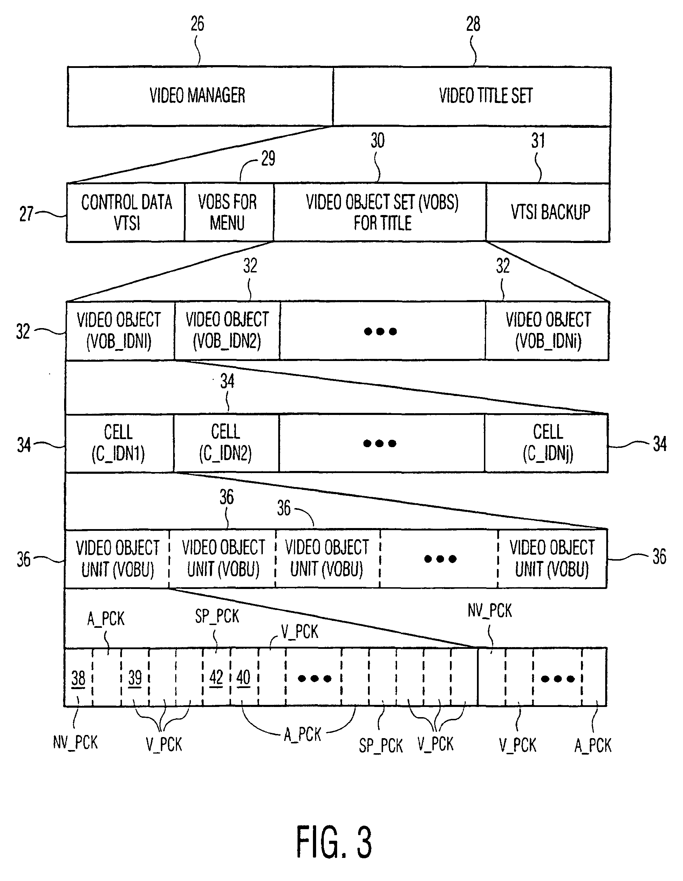

As shown in FIG. 3, each DVD contains a video manager 26 and video title set (VTS) 28. The VTS includes video title set information (VTSI) 27, an optional video object set for menu 29, one or more VOBS for title 30 which contains the actual title content, and a VTSI backup 31. Each VOBS 30 is comprised of a plurality of video objects 32. Each video object 32 includes a plurality of cells 34. Each VOBS also includes a collection of pointers to cells. In this way, the VOBS data links cells together and indicates in what order the programs or cells are to be played. Cells within a particular VOBS can be flagged for play in any desired order. For example, they can be played sequentially or randomly.

Each cell includes a plurality of VOBU's 36. Each of the VOBU's 36 in which the video content of the disc resides typically contains 0.4 to 1.0 seconds of presentation material. Each VOBU 36 is a sequence of data packs in recording order. Each VOBU starts with exactly one navigation pack (NV_PCK) 38 and could encompass all of the following kinds of packs, including video packs (V_PCK) 39, audio packs (A_PCK) 40 and sub-picture packs (SP_PCK) 42. Each VOBU is nominally comprised of one group of pictures (GOP).

## Real-Time Pause Catch-Up For Disc Medium

According to the inventive arrangements, the delay between the real-time recording of video and the display of that video during simultaneous playback and recording can be eliminated by providing a catch-up mode of operation. The present invention includes three arrangements that enable the playback signal to catch-up to the real-time recording. Two of these catch-up modes permit disc medium recorders with limited playback speeds caused by relatively slow reading rates to significantly accelerate the playback of video without having to improve their reading rate capabilities. The third catch-up mode will produce a smoother picture during playback of video in disc medium recorders that can read at higher rates. As a result, these three catch-up modes permit viewers to catch up to their programs in real-time after a pause-resume command, even on disc medium recorders with slow reading rates.

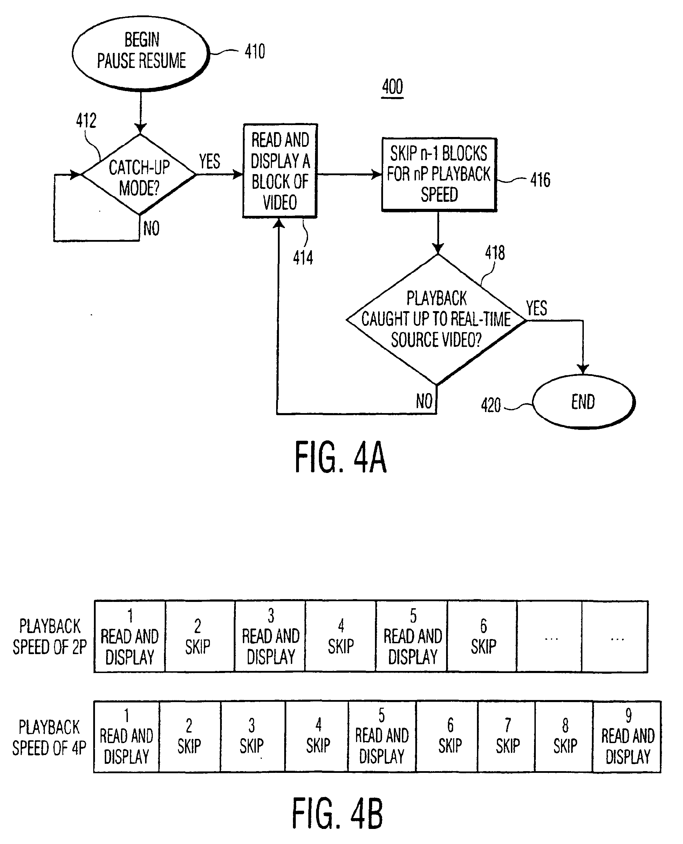

Turning to FIG. 4A, flowchart 400 illustrates the preferred operation of one of these catch-up modes referred to as skip and play catch-up mode. This catch-up mode is preferably used in disc medium recorders that have a maximum reading rate of 11 Mbits/sec (1X). At step 410, a pause-resume command is received and the device 100 begins to alternate between reading and writing data on the disc 102. At this point, the playback signal of the recorded video lags behind the recording of the video. The delay between the recording and the playback signal will remain fixed until the viewer initiates a pause catch-up command in step 412. Once the catch-up command is received, the device 100 can read a block of pictures preferably during the next reading step, as shown in step 414. A block of pictures can contain any number of pictures but is preferably a VOBU in the embodiment described relative to FIG. 4B.

For purposes of buffer management, the time spent in step 414 reading the video in each block is preferably equivalent to the time spent during each writing step and the associated jumping time. For example, if the device 100 typically spends roughly two seconds to (1) position the pickup assembly 108 for the next writing step, (2) write data and (3) position the pickup 108 for the next reading step, then it is preferable for each block to contain two seconds of video. Such an arrangement allows the device 100 to perform the skip-n-play catch-up mode without altering the capacity of its record buffer 152 or its track buffer 172. It should be noted, however, that any amount of video can be contained in each particular block. Moreover, the invention is not limited to reading a single block of video during the reading steps, as the invention can be adapted to read a portion of or a plurality of blocks during each reading step.

At step 414, once a particular block is read, all the pictures contained in the block can be displayed. The device 100 can then skip a predetermined number of blocks, as shown in step 416. Specifically, if the viewer wishes to catch up to live video programming at a rate of $n$P (where P is a normal playback speed), then the device 100 can skip $n-1$ blocks of video before reading another block of video. FIG. 4B illustrates two examples of this process. For a playback speed of 2P, the device 100 can read the first block of video and can display all the pictures contained in this block. The device can then skip the next block of video and can read the third block. The device 100 does not attempt to read the data in the skipped block. Similar to the first block, all the pictures in the third block can be displayed. In this example, the playback speed is doubled.

For a playback speed of 4P, the device can read the first block of video and can display all the pictures contained in this block. The device 100 can then skip the next three blocks of video before reading the fifth block. Once again, all the pictures in this block can be displayed. In this example, the playback speed is quadrupled. Turning back to flowchart 400, in step 418, the catch-up mode can continue until the delay between the playback signal and the video programming source is reduced to a predetermined value, which may be equal to the device 100 propagation delay, as shown in step 420. Subsequently, the catch-up mode can end at step 420.

The overall effect of the skip and play catch-up mode is to accelerate the playback speed of the video without having to increase the maximum reading rate.

This is because a significant amount of video does not have to be read in order for the viewer to eliminate the delay between playback and recording.

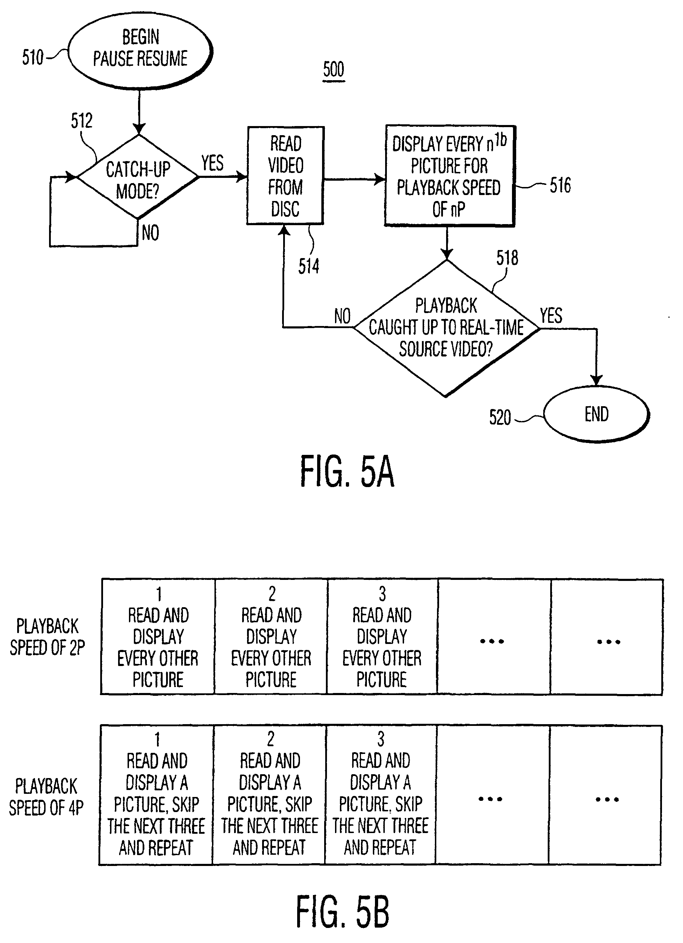

Referring to FIG. 5A, flowchart 500 illustrates the preferred operation of the second catch-up mode, smooth catch-up. This particular catch-up mode is preferably used where the reading speed of a disc medium recorder is greater than or equal to the desired catch-up playback speed. Similar to skip and play, a pause-resume command is received in step 510, and the playback signal initially lags the recording for a fixed amount of time. This can continue until the viewer initiates a pause catch-up mode, as shown in step 512. In contrast to the skip and play mode, the smooth catch-up mode preferably reads all the recorded video from the disc without skipping any blocks during the reading process. To accelerate the video playback, the playback signal can contain a predetermined number of the pictures based on the playback speed. Specifically, the device 100 can read video from the disc at step 514 and can display every $n^{th}$ picture based on a playback speed of $nP$, as shown in step 516. FIG. 5B illustrates two examples of this process in which each picture block displayed can contain one or more pictures.

For a playback speed of 2P, the device 100 can read video data from the disc 102 and can display every other picture. Once all the selected pictures are read, the device 100 can move to read more pictures. In this example, the playback speed is doubled.

For a playback speed of 4P, the device can read video from the disc 102 and can display a first picture. The device 100 can then skip playback of the next three pictures before displaying the fifth picture. This procedure repeats itself during the catch-up mode resulting in a playback speed that is four times faster than normal speed. Turning back to flowchart 500, the catch-up mode can continue until the delay between the continuous real-time source and the DVD playback signal is reduced to a predetermined value, as shown in step 520. Accordingly, the mode can end at step 522.

Since the gaps between displayed video pictures are smaller in the method shown in flowchart 500, the smooth catch-up mode can produce a smoother, more continuous flowing display during playback acceleration. However, since all the pictures in all the blocks are read in smooth catch-up, a disc medium recorder that employs this mode preferably has a relatively high reading rate, typically 2X or greater. In addition, faster processing of the data being read from the disc can cause an increase in the amount of time necessary for each reading step to prevent reading buffer underflow. The increased reading time can also lead to writing buffer overflow. Accordingly, it is preferable to use suitably sized buffers to compensate for the increase in reading time.

Since the disc medium recorder in this case generally has a higher reading rate, the recorder can produce a higher quality display during accelerated playback if the bit rate in the recorder drops below the maximum rate. This is because the lower bit rate produces a lower risk of buffer overflow/underflow thereby allowing the recorder to read and display a greater number of pictures during accelerated playback. Displaying a greater number of pictures causes less information to be lost during the playback thereby increasing the display quality.

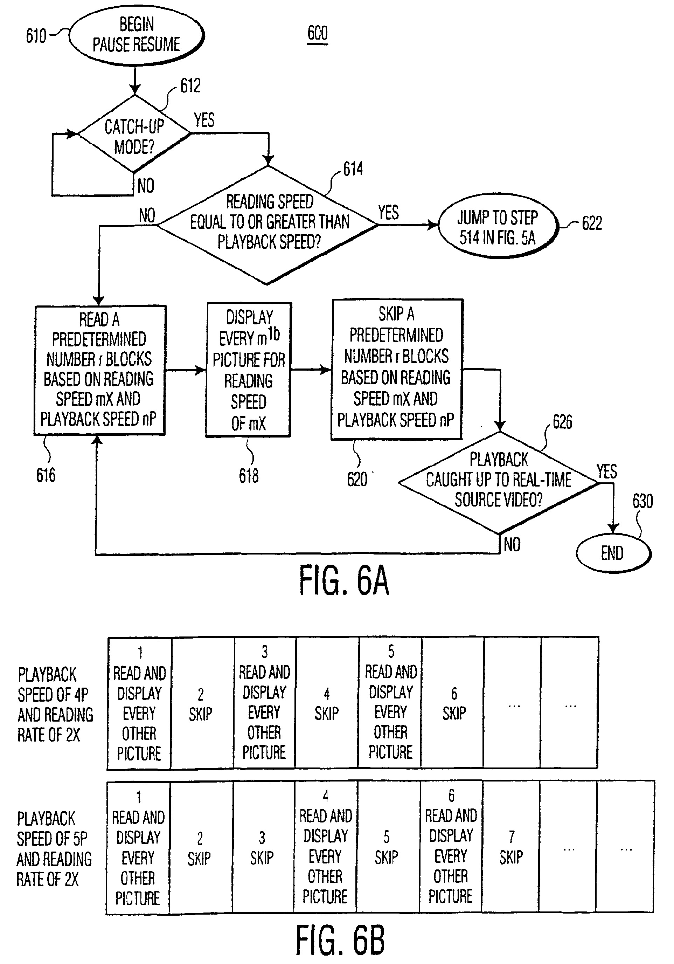

Referring to FIG. 6A, flowchart 600 illustrates the preferred operation of the third catch-up mode, smooth-skip and play mode. This mode incorporates features from both of the previously discussed modes. Specifically, the device 100 can read and then skip a predetermined number of blocks of pictures from the disc 102. The blocks in this case preferably contain groups of pictures and can be a VOBU. The system can then display a predetermined number of pictures contained in the blocks that are read. Preferably, blocks of pictures are skipped if the desired catch-up playback speed is greater than the reading speed. Conversely, if the reading speed is greater than the catch-up playback speed, then it is preferable to avoid skipping blocks of video and to accelerate the playback signal by using the smooth catch-up mode as discussed in flowchart 500.

As in flowcharts 400 and 500, a pause-resume command is received in step 610, and the playback initially lags the recording by a fixed amount of time. This can continue until the viewer initiates the pause catch-up mode, as shown in step 612. As shown in step 614, the device 100 can determine whether the reading speed is greater than the playback speed. If the reading speed is less than the desired catch-up mode playback speed, then the device 100 can read a predetermined number $s$ blocks based on the reading rate $mX$ employed by the device 100 and the playback speed $nP$, as shown in step 616. In accordance with step 618, every $m^{th}$ picture from each block can be displayed based on the reading speed $mX$. This displaying process is similar to that used in the smooth catch-up mode. At step 620, the device 100 can then skip a predetermined number $r$ blocks also based on the reading rate $mX$ and the playback speed $nP$.

Specifically, the device 100 can read $s$ blocks and then skip $r$ blocks
wherein:

$$r/s = (n-m)/m$$

such that: $m$ = the maximum reading rate;
$n$ = the playback speed;
and the greatest common divisor of $r$ and $s$ is 1.
FIG. 6B illustrates two examples of this process.

For a playback speed of 4P and a reading rate of 2X, $r/s$ = 2/2. Thus, $r/s$ = 1/1. Accordingly, the device 100 can read one block of pictures and can skip one block of pictures. The device can then display every other picture from the block. In this example, the actual playback speed is quadrupled.

For a playback speed of 5P and a reading rate of 2X, $r/s$=3/2. Therefore, the device 100 can read two blocks of video and then skip three blocks. In addition, it is preferable to avoid reading blocks in succession if a greater number of blocks are to be skipped. As an example, the device 100 can read block 1, skip blocks 2 and 3, read block 4 and then skip block 5. This can produce a smoother playback since the lowest possible number of blocks are skipped between readings. The device 100 can then display every other picture from the three blocks of pictures that are read. In this example, the playback speed is quintupled.

Turning back to step 626 in flowchart 600, the catch-up mode can continue until the delay between the real-time source video and the playback signal has reached a predetermined value. For example, this may be the propagation delay through the DVD player when operating in pause-resume mode. If so, the mode can end at step 630. Otherwise, the system can continue reading in step 622.

Since a disc medium recorder employing the process of flowchart 600 does not have to read all the blocks of video, the recorder can accelerate the playback without spending an increased amount of time reading video. As a result, it is unnecessary to increase the size of the recorder's reading or writing buffers. Moreover, similar to the smooth catch-up mode, the recorder can produce a higher quality display during accelerated playback if the bit rate in the recorder drops below the maximum rate.

Referring back to flowchart 600, if the playback speed is less than or equal to the maximum reading rate at step 614, then the device 100 can accelerate the playback signal by using the smooth catch-up mode as described in flowchart 500. This process is shown in step 622.

**Claims**

1. A method (400; 500; 600) for resuming real-time display of continuous video programming after a pause interval during which said video programming is recorded on a medium, comprising the steps of:

    responsive to a pause command, recording said video programming in blocks;
    responsive to a resume command, recording and playing back said video programming; and, responsive to a catch-up command, playing back and recording said video programming in a manner that speeds up the playing back over time so as to make the playback programming substantially coincide in time with said recording;
    **characterized by** the steps of:

    during said recording responsive to said pause command (410), recording a plurality of pictures in each of said blocks; and, during the playing back after the catch-up command, playing back said pictures by playing back only selected ones of said blocks to select less than all the recorded video programming (616,620) and selecting less than all of each said plurality of pictures in each of said selected blocks (618).

2. The method according to claim 1, further **characterized by** the step of determining a rate of said playing back after said catch-up command at least in part by controlling a ratio of said blocks selected and not selected for said playing back (FIG. 4B).

3. The method according to claims 1 or 2, further **characterized by** the step of determining a rate of said playing back after said catch-up command at least in part by controlling a ratio of said pictures selected and not selected for said playing back (FIG. 5B).

4. The method according to claims 1-3, further **characterized by** said playing back comprising playing back said selected pictures at a normal playback speed (616).

5. The method according to claims 1-3, further **characterized by** said playing back comprising playing back said selected pictures at a faster than normal playback speed (616).

6. The method according to claims 1-5, further **characterized by** said recording comprising recording at least one complete VOBU (32) in each of said blocks.

7. The method according to claims 1-5, further **characterized by** said recording comprising recording less than all of the pictures of a complete VOBU (32) in at least some of said blocks.

8. A recordable disc medium system (100) for resuming real-time display of continuous video programming after a pause interval during which said video programming is recorded on a medium, comprising:

    means responsive to a pause command for recording said video programming in blocks;
    means responsive to a resume command for recording and playing back said video programming; and,
    means responsive to a catch-up command for playing back and recording said video programming in a manner that speeds up the playing back over time so as to make the playback programming substantially coincide in time with said recording;

**characterized by**:

means (134)operable during said recording responsive to said pause command, for recording a plurality of pictures in each of said blocks; and,
means (134) operable during the playing back after said catch-up command, for playing back said pictures by playing back only selected ones of said blocks to select less than all the recorded video programming (616,620) and selecting less than all of each said plurality of pictures in each of said selected blocks (618).

9. The system according to claim 8, wherein said system is further **characterized by** means (134) for determining a rate of said playing back after said catch-up command at least in part by controlling a ratio of said blocks selected and not selected for said playing back (FIG. 4B).

10. The system according to claims 8 or 9 wherein said selected picture blocks are played back at a normal playback speed (616).

11. The system according to claims 8 or 9 wherein said selected blocks are played back at a rate faster than a normal playback speed (616).

12. The system according to claims 8 - 11 wherein at least one complete VOBU (32) is recorded in each of said blocks.

13. The system according to claims 8 - 12 wherein less than all of the pictures of a complete VOBU (32) are recorded in at least some of said blocks.


**Patentansprüche**

1. Verfahren (400; 500; 600) zum Fortsetzen einer Echtzeit-Anzeige eines kontinuierlichen Videoprogramms nach einem Pausenintervall, während dem das Videoprogramm auf einem Medium aufgezeichnet wird, umfassend die Schritte:

Aufzeichnen des Videoprogramms in Blöcken als Reaktion auf einen Pausenbefehl;
Aufzeichnen und Wiedergeben des Videoprogramms als Reaktion auf einen Fortsetzungsbefehl; und
Wiedergeben und Aufzeichnen des Videoprogramms als Reaktion auf einen Einholbefehl derart, dass die Wiedergabe über der Zeit so beschleunigt wird, dass das Wiedergabeprogramm in der Zeit im wesentlichen mit der Aufzeichnung übereinstimmt; **gekennzeichnet durch** die Schritte:

Aufzeichnen einer Mehrzahl von Bildern in jedem Block während der Aufzeichnung als Reaktion auf den Pausenbefehl (410); und Wiedergeben der Bilder während der Wiedergabe nach dem Einholbefehl, indem nur ausgewählte Blöcke wiedergegeben werden, um weniger als das ganze aufgezeichnete Videoprogramm auszuwählen (610, 620), und Auswählen von weniger als allen der Mehrzahl von Bildern in jedem ausgewählten Block (618).

2. Verfahren nach Anspruch 1, **gekennzeichnet durch** den Schritt der Bestimmung einer Rate der Wiedergabe nach dem Einholbefehl wenigstens teilweise **durch** Steuerung eines Verhältnisses der ausgewählten und nicht ausgewählten Blöcke für die Wiedergabe (Fig. 4B).

3. Verfahren nach Anspruch 1 oder 2, **gekennzeichnet durch** den Schritt der Bestimmung einer Rate der Wiedergabe nach dem Einholbefehl wenigstens teilweise **durch** Steuerung eines Verhältnisses der für die Wiedergabe ausgewählten und nicht ausgewählten Bilder (Fig. 5B).

4. Verfahren nach Anspruch 1 bis 3, **dadurch gekennzeichnet, dass** die Wiedergabe die Wiedergabe der ausgewählten Bilder mit einer normalen Wiedergabe-Geschwindigkeit umfasst (616).

5. Verfahren nach Anspruch 1 bis 3, **dadurch gekennzeichnet, dass** die Wiedergabe die ausgewählten Bilder mit einer höheren als der normalen Wiedergabe-Geschwindigkeit (616) umfasst.

6. Verfahren nach Anspruch 1 bis 5, **dadurch gekennzeichnet, dass** die Aufzeichnung die Aufzeichnung wenigstens einer vollständigen VOBU (32) in jedem Block umfasst.

7. Verfahren nach Anspruch 1 bis 5, **dadurch gekennzeichnet, dass** die Aufzeichnung eine Aufzeichnung von weniger als allen Bildern einer vollständigen VOBU (32) in wenigstens einigen Blöcken umfasst.

8. Aufzeichnungsfähiges Plattenmediumsystem (100) zur Fortsetzung einer Echtzeit-Anzeige eines kontinuierlichen Videoprogramms nach einem Pausenintervall, während dem das Videoprogramm auf einem Medium aufgezeichnet wird, umfassend:

Mittel als Reaktion auf einen Pausenbefehl, um das Videoprogramm in Blöcken aufzuzeichnen;
Mittel als Reaktion auf einen Fortsetzungsbefehl, um das Videoprogramm aufzuzeichnen und wiederzugeben; und

Mittel als Reaktion auf einen Einholbefehl zur Wiedergabe und Aufzeichnung des Videoprogramms in einer Weise, die die Wiedergabe über der Zeit so beschleunigt, dass das Wiedergabeprogramm in der Zeit weitgehend mit der Aufzeichnung übereinstimmt; **gekennzeichnet durch**:

Mittel (134), die während der Aufzeichnung als Reaktion auf den Pausenbefehl betriebsfähig sind, um eine Mehrzahl von Bildern in jedem der Blöcke aufzuzeichnen; und

Mittel (134), die während der Wiedergabe nach dem Einholbefehl betriebsfähig sind, um die Bilder **durch** Wiedergabe nur ausgewählter Blökke wiederzugeben, um weniger als das ganze aufgezeichnete Videoprogramm (616, 620) auszuwählen, und Auswählen weniger als alle Bilder in jedem ausgewählten Block (618).

9. System nach Anspruch 8, **gekennzeichnet durch** Mittel (134) zur Bestimmung einer Rate der Wiedergabe nach dem Einholbefehl wenigstens teilweise **durch** Steuern eines Verhältnisses der für die Wiedergabe ausgewählten und nicht ausgewählten Blöcke (Fig. 4B).

10. System nach Anspruch 8 oder 9, bei dem die ausgewählten Blöcke mit einer normalen Wiedergabe-Geschwindigkeit wiedergegeben werden (616).

11. System nach Anspruch 8 oder 9, bei dem die ausgewählten Blöcke mit einer schnelleren Rate als der normalen Wiedergabe-Geschwindigkeit wiedergegeben werden (616).

12. System nach Anspruch 8 bis 11, bei dem wenigstens eine vollständige VOBU (32) in jedem Block aufgezeichnet wird.

13. System nach Anspruch 8 bis 12, bei dem weniger als alle Bilder einer vollständigen VOBU (32) in wenigstens einigen der Blöcke aufgezeichnet werden.

**Revendications**

1. Un procédé (400 ; 500 ; 600) pour reprendre un affichage en temps réel d'une programmation vidéo continue après un intervalle de pause durant lequel ladite programmation vidéo est enregistrée sur un support, comprenant les étapes suivantes :

en réponse à une commande de pause, enregistrement de ladite programmation vidéo dans des blocs ;

en réponse à une commande de reprise, enregistrement et reproduction de ladite programmation vidéo ; et,

en réponse à une commande de reprise de retard, reproduction et enregistrement de ladite programmation vidéo de façon à augmenter la vitesse de reproduction afin que la durée de la programmation de la reproduction coïncide en grande partie avec la durée dudit enregistrement ;

**caractérisé par** les étapes suivantes :

lors dudit enregistrement en réponse à ladite commande de pause (410), enregistrement d'une pluralité d'images dans chacun desdits blocs ; et,

lors de la reproduction suite à la commande de reprise de retard, reproduction desdites images en reproduisant uniquement celles sélectionnées dans lesdits blocs pour une sélection inférieure à la totalité de la programmation vidéo enregistrée (616, 620) et une sélection inférieure à la totalité de ladite pluralité d'images dans chacun desdits blocs sélectionnés (618).

2. Le procédé selon la revendication 1, **caractérisé en outre par** l'étape de détermination d'une cadence de ladite reproduction suite à ladite commande de reprise de retard en commandant au moins en partie un rapport entre lesdits blocs sélectionnés et non sélectionnés pour ladite reproduction (FIG. 9B).

3. Le procédé selon les revendications 1 ou 2, **caractérisé en outre par** l'étape de détermination d'une cadence de ladite reproduction suite à ladite commande de reprise de retard en commandant au moins en partie un rapport entre lesdites images sélectionnées et non sélectionnées pour ladite reproduction (FIG. 5B).

4. Le procédé selon les revendications 1-3, **caractérisé en outre par** ladite reproduction comprenant une reproduction desdites images sélectionnées à une vitesse normale de reproduction (616).

5. Le procédé selon les revendications 1-3, **caractérisé en outre par** ladite reproduction comprenant une reproduction desdites images sélectionnées à une vitesse de reproduction plus élevée que la vitesse normale (616).

6. Le procédé selon les revendications 1-5, **caractérisé en outre par** ledit enregistrement comprenant un enregistrement d'au moins une VOBU complète (32) dans chacun desdits blocs.

**7.** Le procédé selon les revendications 1-5, **caractérisé en outre par** ledit enregistrement comprenant un enregistrement inférieur à la totalité des images d'une VOBU (32) complète dans au moins certains desdits blocs.

**8.** Un système de supports de disques enregistrables (100) pour reprendre un affichage en temps réel d'une programmation vidéo continue suite à un intervalle de pause durant lequel ladite programmation vidéo est enregistrée sur un support, comprenant :

des moyens en réponse à une commande de pause pour enregistrer ladite programmation vidéo dans des blocs ;
des moyens en réponse à une commande de reprise pour enregistrer et reproduire ladite programmation vidéo ; et,
des moyens en réponse à une commande de reprise de retard pour reproduire et enregistrer ladite programmation vidéo de façon à augmenter la vitesse de reproduction afin que la durée de la programmation de la reproduction coïncide en grande partie avec la durée dudit enregistrement :
**caractérisé par** :

des moyens (134) utilisables lors dudit enregistrement en réponse à ladite commande de pause, pour enregistrer une pluralité d'images dans chacun desdits blocs ; et,
des moyens (134) utilisables lors de la lecture suite à ladite commande de reprise de retard, pour reproduire lesdites images en reproduisant uniquement celles sélectionnées dans lesdits blocs pour une sélection inférieure à la totalité de la programmation vidéo enregistrée (616, 620) et une sélection inférieure à la totalité de ladite pluralité d'images dans chacun desdits blocs sélectionnés (618).

**9.** Le système selon la revendication 8, où ledit système est **caractérisé en outre par** des moyens (134) de détermination d'une cadence de ladite reproduction suite à ladite commande de reprise de retard en commandant au moins en partie un rapport entre lesdits blocs sélectionnés et non sélectionnés pour ladite reproduction (FIG. 4B).

**10.** Le système selon les revendications 8 ou 9, où lesdits blocs d'images sélectionnés sont reproduits à une vitesse normale de reproduction (616).

**11.** Le système selon les revendications 8 ou 9, où lesdits blocs sélectionnés sont reproduits à une cadence plus élevée qu'une vitesse normale de reproduction (616).

**12.** Le système selon les revendications 8-11, où au moins une VOBU complète (32) est enregistrée dans chacun desdits blocs.

**13.** Le système selon les revendications 8-12, où moins de la totalité des images d'une VOBU (32) complète sont enregistrées dans au moins certains desdits blocs.

FIG. 1

10

20          12

16

14

18

FIG. 2

FIG. 3

BEGIN
PAUSE RESUME ~ 410

400

412

CATCH-UP MODE? —YES→ READ AND DISPLAY A BLOCK OF VIDEO → SKIP n-1 BLOCKS FOR nP PLAYBACK SPEED ~ 416

NO

414

418

PLAYBACK CAUGHT UP TO REAL-TIME SOURCE VIDEO? —YES→

NO

420 ~ END

FIG. 4A

| | 1 READ AND DISPLAY | 2 SKIP | 3 READ AND DISPLAY | 4 SKIP | 5 READ AND DISPLAY | 6 SKIP | ... | ... |
|---|---|---|---|---|---|---|---|---|
| PLAYBACK SPEED OF 2P | | | | | | | | |

| | 1 READ AND DISPLAY | 2 SKIP | 3 SKIP | 4 SKIP | 5 READ AND DISPLAY | 6 SKIP | 7 SKIP | 8 SKIP | 9 READ AND DISPLAY |
|---|---|---|---|---|---|---|---|---|---|
| PLAYBACK SPEED OF 4P | | | | | | | | | |

FIG. 4B

510 — BEGIN
PAUSE RESUME

512

CATCH-UP
MODE?

YES

READ
VIDEO
FROM
DISC

514

500

DISPLAY EVERY $n^{1b}$
PICTURE FOR
PLAYBACK SPEED
OF nP

516

NO

518

PLAYBACK
CAUGHT UP TO REAL-TIME
SOURCE VIDEO?

NO

YES

520 — END

FIG. 5A

| | 1 | 2 | 3 | | |
|---|---|---|---|---|---|
| PLAYBACK SPEED OF 2P | READ AND DISPLAY EVERY OTHER PICTURE | READ AND DISPLAY EVERY OTHER PICTURE | READ AND DISPLAY EVERY OTHER PICTURE | ... | ... |

| | 1 | 2 | 3 | | |
|---|---|---|---|---|---|
| PLAYBACK SPEED OF 4P | READ AND DISPLAY A PICTURE, SKIP THE NEXT THREE AND REPEAT | READ AND DISPLAY A PICTURE, SKIP THE NEXT THREE AND REPEAT | READ AND DISPLAY A PICTURE, SKIP THE NEXT THREE AND REPEAT | ... | ... |

FIG. 5B

610 — **BEGIN PAUSE RESUME**

<u>600</u>

612 — **CATCH-UP MODE?**
— YES
— NO

614 — **READING SPEED EQUAL TO OR GREATER THAN PLAYBACK SPEED?**
— NO
— YES → **JUMP TO STEP 514 IN FIG. 5A** — 622

616 — **READ A PREDETERMINED NUMBER r BLOCKS BASED ON READING SPEED mX AND PLAYBACK SPEED nP**

618 — **DISPLAY EVERY $m^{1b}$ PICTURE FOR READING SPEED OF mX**

620 — **SKIP A PREDETERMINED NUMBER r BLOCKS BASED ON READING SPEED mX AND PLAYBACK SPEED nP**

626 — **PLAYBACK CAUGHT UP TO REAL-TIME SOURCE VIDEO?**
— YES → 630 **END**
— NO

## FIG. 6A

| | 1 | 2 | 3 | 4 | 5 | 6 | | |
|---|---|---|---|---|---|---|---|---|
| PLAYBACK SPEED OF 4P AND READING RATE OF 2X | READ AND DISPLAY EVERY OTHER PICTURE | SKIP | READ AND DISPLAY EVERY OTHER PICTURE | SKIP | READ AND DISPLAY EVERY OTHER PICTURE | SKIP | … | … |

| | 1 | 2 | 3 | 4 | 5 | 6 | 7 | | |
|---|---|---|---|---|---|---|---|---|---|
| PLAYBACK SPEED OF 5P AND READING RATE OF 2X | READ AND DISPLAY EVERY OTHER PICTURE | SKIP | SKIP | READ AND DISPLAY EVERY OTHER PICTURE | SKIP | READ AND DISPLAY EVERY OTHER PICTURE | SKIP | … | … |

## FIG. 6B